# EUROPEAN PATENT APPLICATION

(11) **EP 4 554 314 A1**
(43) Date of publication of application: **14.05.2025**
(21) Application number: 23854998.4
(22) Date of filing: 13.06.2023
(51) Int. Cl.: H04W 76/10, H04W 88/08, H04W 88/12, H04W 92/12, H04W 92/20, H04W 92/24

(54) **APPARATUS AND METHOD FOR PROVIDING STANDARD VERSION**

(30) Priority: 19.08.2022 KR 20220104393
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); PARK, Soyeun, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2023/008149
(87) International publication number: WO 2024/039027

(57) **Abstract**

The present disclosure relates to a 5th generation (5G) or pre-5G communication system for supporting a data transmission rate higher than that of 4th generation (4G) communication systems such as long term evolution (LTE). In embodiments, a method performed by an E2 node may comprise an operation of transmitting an E2 setup request message to a near real-time (RT) radio access network (RAN) intelligent controller (RIC). The method may comprise an operation of receiving an E2 setup response message from the RIC. The E2 setup request message can include information for indicating an E2 interface between the near-RT RIC and the E2 node from among an NG interface, an XN interface, an E1 interface, an F1 interface, a W1 interface, an S1 interface, an X2 interface, and the E2 interface and information for indicating a version of an E2 application protocol (E2AP) of a radio network layer of the E2 interface.

## Description

### BACKGROUND

### 1. Field

The disclosure relates to an apparatus and a method for providing a specification version.

### 2. Description of Related Art

5th generation (5G) communication system or a pre-5G communication system has been developed or improved to meet the growing demand for wireless data traffic since the 4th generation (4G) communication system was commercialized. For this reason, the 5G communication system or the pre-5G communication system is often referred to as a Beyond 4G network communication system or a Post LTE (Long Term Evolution) system.

In order to achieve a high data rate, the 5G communication system is being considered for implementation in an ultra-high frequency (mmWave) band (e.g., 60 giga-hertz (GHz) band). Further, in order to mitigate the path loss of radio waves and increase transmission distances of radio waves in the ultra-high frequency band, advanced technologies, such as beamforming, Massive MIMO, and Full Dimensional MIMO (FD-MIMO), array antenna, analog beam-forming, and large-scale antenna technologies are being discussed and developed for the 5G communication systems.

Further, in order to improve networks in the 5G communication system, technologies for evolved small cell and advanced small cell, such as cloud radio access network (cloud RAN), ultra-dense network, device to device (D2D) communication, wireless backhaul, moving network, cooperative communication, coordinated multi-points (CoMP), receive interference cancellation or the like are being developed.

In addition, in the 5G communication system, an advanced coding modulation (ACM) methods, such as e.g., FQAM (Hybrid Frequency Shift Keying and Quadrature Amplitude Modulation) and SWSC (Sliding Window Superposition Coding) are being developed. Also, an advanced access technologies, such as e.g., FBMC (Filter Bank Multi Carrier), Non-Orthogonal Multiple Access (NOMA), and Sparse Code Multiple Access (SCMA), are being developed.

In order to meet the demand for radio data traffic, the 5G communication system (NR (new radio or next radio)) has been commercialized. The 5G communication system provides a user with a high data rate service like the 4G communication system. In addition, the 5G communication system provides a wireless communication service with various purposes (such as Internet of Things (IoT) and a service that requires high reliability for a specific purpose, and others. In a system where the 4th generation communication system is mixed with the 5th generation system, an open radio access network (O-RAN) defines an E2 application protocol (E2AP) specification for an application protocol of an E2 interface between an E2 node and a near-real time (RT) radio access network (RAN) intelligent controller (RIC). The O-RAN is established by a gathering of operators and equipment providers.

### SUMMARY

Provided are an apparatus and a method for controlling an E2 node by a radio access network (RAN) intelligent controller (RIC) in a radio access network. Provided are the apparatus and the method for controlling the E2 node through an E2 message conforming to an open radio access network (O-RAN) specification of a wireless communication system.

In addition, provided are the apparatus and the method for transmitting, to an RIC in the wireless communication system, a specification number (e.g., a version of the specification) about the O-RAN E2 application protocol (E2AP) of the E2 node.

According to one or more embodiments, a method performed by a first base station, includes: transmitting, to a network controller, an E2 setup request message; and receiving, from the network controller, an E2 setup response message. The E2 setup request message includes version information indicating a version number of standard of a communication protocol, and the communication protocol comprises an E2 application protocol (E2AP). For example, the network controller may be a near real time (RT) radio access network (RAN) intelligent controller (RIC) and the first base station may be an E2 node.

According to one or more embodiments, a method performed by a network controller, includes: receiving, from a first base station, an E2 setup request message; and transmitting, to the first base station, an E2 setup response message. The E2 setup request message includes version information indicating a version number of standard of a communication protocol, and the communication protocol comprises an E2 application protocol (E2AP).

According to one or more embodiments, a first base station includes: at least one transceiver; and at least one processor electrically connected to the at least one transceiver. The at least one processor is configured to: transmit, to a network controller, an E2 setup request message, and receive, from the network controller, an E2 setup response message. The E2 setup request message includes version information for indicating a version number of standard of a communication protocol, and the communication protocol comprises E2 application protocol (E2AP).

According to one or more embodiments, a network controller includes: at least one transceiver; and at least one processor electrically connected to the at least one transceiver. The at least one processor is configured to: receive, from an first base station, an E2 setup request message, and transmit, to the first base station, an E2 setup response message. The E2 setup request message includes version information for indicating a version number of standard of a communication protocol, and the communication protocol comprises an E2 application protocol (E2AP).

According to one or more embodiments, a method performed by an E2 node may include transmitting an E2 setup request message to a near-real time (RT) radio access network (RAN) intelligent controller (RIC). The method may include receiving an E2 setup response message from the RIC. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to one or more embodiments, the method performed by the near-real time (RT) radio access network (RAN) intelligent controller (RIC) may include receiving the E2 setup request message from the E2 node. The method may include transmitting the E2 setup response message to the E2 node. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to one or more embodiments, an apparatus of the E2 node may include at least one transceiver and at least one processor coupled to the at least one transceiver. The at least one processor may be configured to transmit the E2 setup request message to the near-real time (RT) radio access network (RAN) intelligent controller (RIC). The at least one processor may be configured to receive the E2 setup response message from the RIC. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to one or more embodiments, an apparatus of the near-real time (RT) radio access network (RAN) intelligent controller (RIC) may include the at least one transceiver and the at least one processor coupled to the at least one transceiver. The at least one processor may be configured to receive the E2 setup request message from the E2 node. The at least one processor may be configured to transmit the E2 setup response message to the E2 node. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an example of a 4th generation (4G) Long Term Evolution (LTE) core system;
FIG. 2A illustrates an example of a 5th generation (5G) non-standard alone (NSA) system;
FIG. 2B illustrates an example of an architecture for open radio access network (O-RAN);
FIG. 3 illustrates a protocol stack of an E2 application protocol message in a radio access network according to one or more embodiments;
FIG. 4 illustrates an example of a connection between a base station and a radio access network (RAN) intelligence controller (RIC) in a radio access network according to one or more embodiments;
FIG. 5 illustrates a configuration of an apparatus in a radio access network according to one or more embodiments;
FIG. 6 illustrates logical functions related to an E2 message of an RIC and an E2 node in a radio access network according to one or more embodiments;
FIG. 7 illustrates examples of functional separation between an E2 node and an RIC according to one or more embodiments;
FIG. 8 illustrates an example of implementation of an E2 node and an RIC according to the embodiments;
FIG. 9 illustrates examples of functional separation between a centralized unit (CU) and an RIC according to one or more embodiments;
FIG. 10 illustrates an example of transmitting a version number of an E2 application protocol (E2AP) specification according to one or more embodiments;
FIGS. 11A to 11D illustrate an example of an E2 setup request message for providing a version number of an E2AP specification, according to one or more embodiments; and
FIG. 12 illustrates an example of identifying compatibility according to a version number of an E2AP specification according to one or more embodiments.

### DETAILED DESCRIPTION

The terms used in the disclosure are merely used to better describe a certain embodiment and are not intended to limit the scope of other embodiments thereto. A singular expression may include a plural expression unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure shall not be interpreted to exclude embodiments of the disclosure.

In various examples of the disclosure described below, a hardware approach will be described as an example. However, since one or more embodiments of the disclosure include a technology that utilizes both the hardware and the software, they are not intended to exclude the software-based approach.

Hereinafter, the disclosure relates to a control procedure between a device in a radio access network (RAN) and a device controlling the RAN in a wireless communication system. More particular, the disclosure relates to a procedure, messages, and a method to perform appropriate operations according to the specification and to ensure backward compatibility by providing the version number (e.g., E2AP 2.02) of E2AP specification to the RAN intelligence controller (RIC) by the E2 node.

As used in the following description, the terms referring to a configuration (e.g., setup, setting, arrangement, control), the terms referring to a signal (e.g., packet, message, signal, information, signaling), the terms referring to a resource (e.g., section, symbol, slot, subframe, radio frame, subcarrier, resource element (RE), resource block (RB), bandwidth part (BWP), occasion), the terms for indicating an operating state (e.g., step, operation, procedure), the terms referring to data (e.g., packet, message, user stream, information, bit, symbol, codeword), the terms referring to a channel, the terms referring to network entities (distributed unit (DU), radio unit (RU), central unit (CU), control plane (CU-CP), O-DU (O-RAN(open radio access network) DU), O-RU (O-RAN RU), O-CU (O-RAN CU), O-CU-UP (O-RAN CU-CP), O-CU-CP (O-RAN CU-CP)), the terms referring to components of an apparatus, and so on are illustrated for convenience of description. Therefore, the disclosure is not limited to those terms described below, and other terms having equivalent technical meanings thereto may be used therefor. In addition, as used herein, the terms such as e.g., '... unit', '... module', '... group', '... part' may mean at least one form of structure or a unit that processes a certain function.

Further, throughout the disclosure, an expression such as e.g., 'above (or exceeding)' or 'below' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'above', a condition described as 'less than or equal to' may be replaced with 'below', and a condition described as 'more than or equal to' and 'below' may be replaced with 'above' and 'less than or equal to', respectively. Further, unless explicitly dictated otherwise, 'A' to 'B' is intended to mean at least one of the elements from A to (inclusive of A) and B (inclusive of B).

Further, the disclosure describes one or more embodiments using the terms used in some communication standard specifications (e.g., 3rd Generation Partnership Project (3GPP), extensible radio access network (xRAN), open-radio access network (O-RAN), but they are merely of an example for description. One or more embodiments of the disclosure may be easily modified and applied even in other communication systems.

Along with the commercialization of 4G communication system and 5G communication systems (e.g., New Radio (NR)), differentiated service supports have been ever required for users in a virtualized network. Thus, the 3GPP has been originated from a joint research project between several mobile communication-related organizations, aiming to create a 3G mobile communication system specification, globally applicable, within the scope of IMT-2000 project of the International Telecommunication Union (ITU).

The 3GPP was established in December 1998, and the 3GPP specification is based on the advanced GSM standard, including all of radio, core network, and service architecture in the standardization range. Accordingly, the O-RAN has newly defined RU (radio unit), DU (digital unit), CU (central unit) - CP (control plane), and CU-UP (user plane), which are nodes constituting a 3GPP network entity (NE) and a base station, as O(O-RAN)-RU, O-DU, O-CU-CP, and O-CU-UP, respectively, and additionally standardized the near-real-time (near-RT) RIC (radio access network intelligent controller).

According to one or more embodiments, the disclosure is directed to an operator specific service model in an E2 interface in which an RIC requests a service from O-DU, O-CU-CP or O-CU-UP. Here, O-RU, O-DU, O-CU-CP, and O-CU-UP may be understood as objects constituting a RAN capable of operating according to an O-RAN standard, and may be referred to as 'E2 nodes.' An interface with the objects constituting the RAN capable of operating according to the O-RAN standard between the RIC and the E2 nodes uses an E2AP, which is an application protocol.

The RIC is a logical node that may collect information on a cell site where a terminal, an O-DU, an O-CU-CP, or an O-CU-UP transmits and receives. The RIC may be implemented in the form of servers concentrated in one physical location. Connections may be established between O-DU and RIC, between O-CU-CP and RIC, and between O-CU-UP and RIC through Ethernet. To this end, the interface standard specification for communication between O-DU and RIC, between O-CU-CP and RIC, and between O-CU-UP and RIC are required, and the definitions of the message specification for E2-DU, E2-CU-CP, E2-CU-UP or the like and the procedures between O-DU, O-CU-CP, O-CU-UP and RIC are required as well. In particular, it is necessary to define the functions of E2-DU, E2-CU-CP, and E2-CU-UP messages for supporting services for a wide range of cell coverage, as the differentiated service support is required for users in a virtualized network and the call processing messages/functions generated in the O-RAN are concentrated on the RIC.

The RIC may perform communications with O-DU, O-CU-CP, and O-CU-UP using the E2 interface, and generate and transmit a subscription message to set event occurrence conditions. More specifically, the RIC may generate an E2 subscription request message and transfer the same to an E2 node (e.g., O-CU-CP, O-CU-UP, O-DU) to set a call processing EVENT. Further, subsequent to setting the call processing EVENT, the E2 node may transmit a subscription request response message transferred to the RIC.

The E2 node may transmit the current status to the RIC through an E2 indication/report. The RIC may use an E2 control message to control O-DU, O-CU-CP, and O-CU-UP. One or more embodiments of the disclosure propose an E2 indication message that transmits a UE unit of measurement information for each period set in a subscription event condition in the O-DU. Furthermore, one or more embodiments of the disclosure propose a message for controlling a resource transmitted from the RIC to the O-DU.

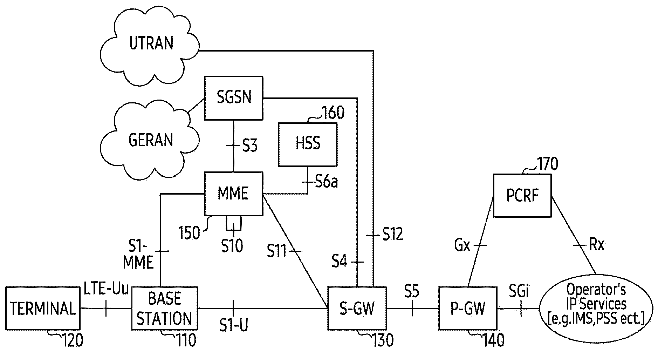

FIG. 1 illustrates an example of a 4G (fourth generation) LTE (Long Term Evolution) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is an apparatus that collects state information of the terminal 120, such as a buffer state, an available transmission power, or a channel state, to perform scheduling. The base station 110 has a coverage defined as a certain geographic area based on a distance capable of transmitting a signal. The base station 110 is connected to the MME 150 through an S1-MME interface. In addition, the base station 110 may be also referred to as 'access point (AP)', 'eNodeB (eNB)', 'wireless point', 'transmission/reception point (TRP)', or other terms having an equivalent technical meaning thereto.

The terminal 120, which is a device used by a user, performs communications with the base station 110 through a radio channel. In some cases, the terminal 120 may be operated without any user involvement. For example, the terminal 120 may be a device to perform machine-type communication (MTC), and may not be carried by a user. Further, the terminal 120 may be referred to as 'user equipment (UE)', 'mobile station', 'subscriber station', 'customer-premises equipment (CPE)', 'remote terminal', 'wireless terminal', 'user device', or any other term having an equivalent meaning thereto.

The S-GW 130 provides a data bearer, and generates or controls the data bearer under the control of the MME 150. For example, the S-GW 130 may process packets arriving from the base station 110 or packets to be forwarded to the base station 110. Further, the S-GW 130 may serve as an anchor during handover of the terminal 120 between base stations. The P-GW 140 may serve as a connection point with an external network (e.g., an Internet network). Further, the P-GW 140 may allocate an Internet Protocol (IP) address to the terminal 120 and serves as an anchor for the S-GW 130. Further, the P-GW 140 may apply a quality of service (QoS) policy of the terminal 120 and manage account data.

The MME 150 manages mobility of the terminal 120. Further, the MME 150 may perform authentication, bearer management, and so on for the terminal 120. That is to say, the MME 150 is in charge of mobility management and various control functions for the terminal. The MME 150 may be associated with a serving GPRS support node (SGSN).

The HSS 160 stores key information and subscriber profile for authentication of the terminal 120. The key information and the subscriber profile are transmitted from the HSS 160 to the MME 150 when the terminal 120 makes access to a network.

The PCRF 170 defines rules for the policy and the charging. The stored information is transmitted from the PCRF 170 to the P-GW 140, and the P-GW 140 may perform control (e.g., QoS management, charging, etc.) of the terminal 120 based on the information provided from the PCRF 170.

Carrier aggregation (hereinafter, referred to as 'CA') may be capable of combining multiple component carriers and transmitting/receiving signals using such multiple component carriers at the same time, thereby increasing the efficiency of frequency use from the viewpoint of a terminal or a base station. Specifically, according to the CA technology, the terminal and the base station may transmit and receive signals using a broadband, using multiple component carriers in uplink (UL) and downlink (DL), respectively. Each of the component carriers is located in a different frequency band. Hereinafter, the term 'uplink' refers to a communication link the terminal transmits a signal to the base station, and the term 'downlink' refers to a communication link the base station transmits a signal to the terminal. In such a circumstance, the number of uplink component carriers and downlink component carriers may be different from each other.

Dual connectivity or multi-connectivity may increase the efficiency of frequency use from the viewpoint of a terminal or base station, by having one terminal connected to multiple base stations to transmit and receive signals simultaneously using carriers in the multiple base stations located in different frequency bands. The terminal may be connected to a first base station (e.g., a base station providing services using LTE technology or 4G mobile communication technology) and a second base station (e.g., a base station providing services using NR technology or 5G mobile communication technology) at the same, to transmit and receive traffic. In such a case, the frequency resources used by each base station may be located in different bands. As such, a scheme that operates based on a dual connectivity with LTE and NR may be referred to as 5G non-standalone (NSA).

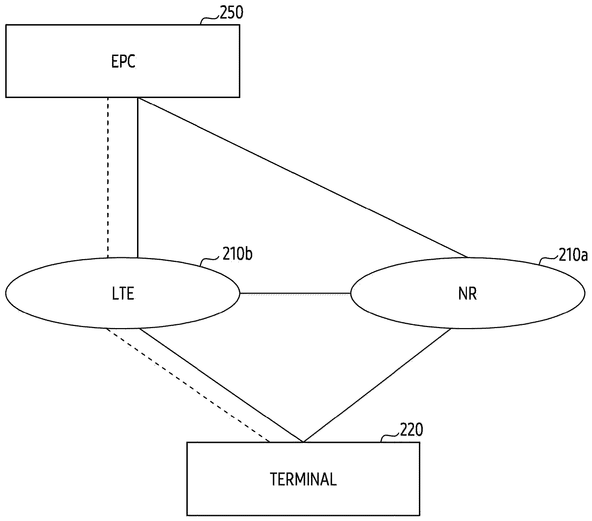

FIG. 2A illustrates an example of a 5G NSA system.

Referring to FIG. 2A, the 5G NSA system includes an NR RAN 210a, an LTE RAN 210b, a terminal 220, and an evaded packet core (EPC) 250. The NR RAN 210a and the LTE RAN 210b are connected to the EPC 250, and the terminal 220 may receive a service from either one or both of the NR RAN 210a and the LTE RAN 210b at the same time. The NR RAN 210a includes at least one NR base station, and the LTE RAN 210b includes at least one LTE base station. Here, the NR base station may be referred to as '5th generation (5G) node,' 'next generation nodeB (gNB),' or other terms having an equivalent technical meaning. Further, the NR base station may have a structure separated by a central unit (CU) and a digital unit (DU), and the CU may also have a structure separated by a control plane (CU-CP) unit and a user plane (CU-UP) unit.

In the structure shown in FIG. 2A, the terminal 220 may perform a radio resource control (RRC) connection through a first base station (e.g., a base station belonging to LTE RAN 210b) and may be served with a function (e.g., connection management, mobility management, etc.) provided in the control plane. Further, the terminal 220 may be provided with an additional radio resource for transmitting and receiving data through a second base station (e.g., a base station belonging to NR RAN 210a). Such dual connectivity technology using the LTE and the NR may be referred to as EN-DC evolved universal terrestrial radio access (E-UTRA) - NR dual connectivity). Similarly, the dual connectivity technology that the first base station uses the NR technology and the second base station uses the LTE technology may be referred to as NR-DC (NR - E-UTRA dual connectivity). Further, one or more embodiments may be applied to various other forms of multi-connectivity and carrier aggregation technologies. Furthermore, one or more embodiments may be also applied in a case where a first system (using a first communication technology) and a second system (using a second communication technology) are implemented in one device, or in a case where a first base station and a second base station are located in the same geographical location.

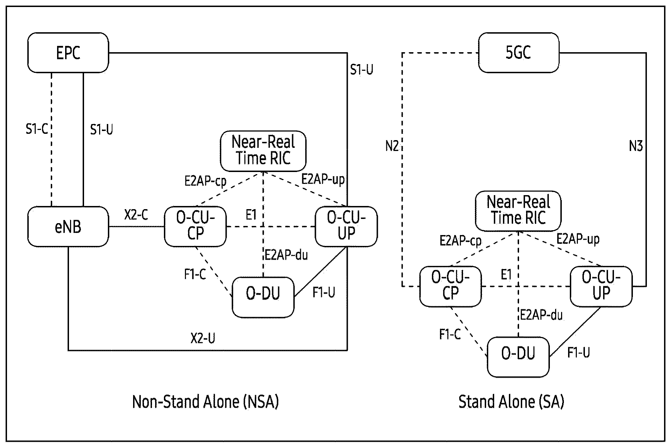

FIG. 2B illustrates an example of an architecture for O-RAN. For the purpose of E2-SM-KPIMON (key performance indicator (KPI) monitoring) of an E2 service model, an O-RAN NSA mode in multi-connectivity operation using E-UTRA and NR radio access technology may be considered, while the E2 node may be assumed to be in O-RAN standalone (SA) mode.

Referring to FIG. 2B, in deployment of the O-RAN NSA mode, the eNB may be connected to the EPC via an S1-C/S1-U interface, and may be connected to the O-CU-CP via an X2 interface. The O-CU-CP for deployment of the O-RAN SA mode may be connected to the 5GC (5G core) via an N2/N3 interface.

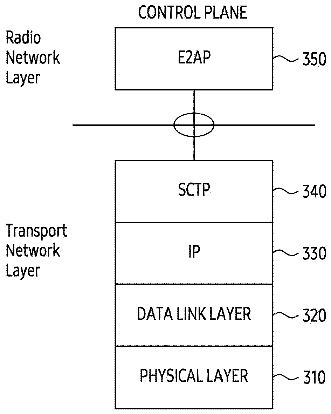

FIG. 3 illustrates an example of a protocol stack of an E2 application protocol message in a radio access network according to one or more embodiments of the disclosure. Referring to FIG. 3, a control plane includes a transport network layer and a radio network layer. The transport network layer includes a physical layer 310, a data link layer 320, an Internet protocol (IP) 330, and a stream control transmission protocol (SCTP) 340.

The radio network layer includes an E2AP 350. The E2AP 350 may be used to deliver a subscription message, an indication message, a control message, a service update message, and a service query message, and may be transmitted from a higher layer of the SCTP 340 and the IP 330.

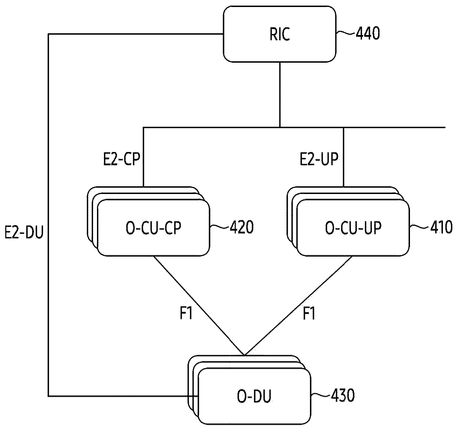

FIG. 4 illustrates an example of connection between a base station and a RIC in a radio access network according to one or more embodiments of the disclosure.

Referring to FIG. 4, the RIC 440 is connected to the O-CU-UP 410, the O-CU-CP 420, and the O-DU 430. The RIC 440 may customize the RAN functionality for new services or regional resource optimization. The RIC 440 may provide network intelligence (e.g., policy enforcement, handover optimization), resource assurance (e.g., radio-link management, advanced self-organized network (SON), resource control (e.g., load balancing, slicing policy) or the like. The RIC 440 may communicate with the O-CU-CP 420, the O-CU-UP 410, and the O-DU 430. The RIC 440 may be connected to each node through E2-CP, E2-UP, and E2-DU interfaces. Further, the interface between the O-CU-CP and the DU, and/or between the O-CU-UP and the DU may be referred to as an F1 interface. In the following description, DU and O-DU, CU-CP and O-CU-CP, and CU-UP and O-CU-UP may be respectively used interchangeably with each other.

Although FIG. 4 illustrates one RIC 440, a plurality of RICs may exist according to one or more embodiments. The plurality of RICs may be implemented with a plurality of hardware located in the same physical location or may be implemented by means of virtualization using one hardware.

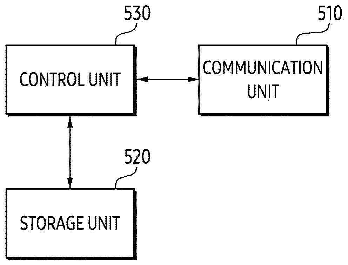

FIG. 5 illustrates an example of a configuration of an apparatus according to one or more embodiments of the disclosure. The configuration illustrated in FIG. 5 may be understood as a configuration of a device having at least one function of near-RT RIC, non-RT RIC, O-CU-CP, O-CU-UP, and O-DU of FIG. 4. As used hereunder, the terms such as '~ module', '~ unit', '~ group', '~ part', or the like may refer to a unit that process at least one function or operation, which may be implemented as hardware, software, or a combination of hardware and software.

Referring to FIG. 5, a core network device includes a communication unit 510, a storage unit 520, and a controller 530.

The communication unit 510 provides an interface for performing communication with other devices in a network. In other words, the communication unit 510 converts a bit string transmitted from the core network device to another device into a physical signal and converts the physical signal received from the other device into a bit string. That is, the communication unit 510 may transmit and receive signals. Accordingly, the communication unit 510 may be referred to as a modem, a transmit unit, a receive unit, or a transmit/receive unit. In this case, the communication unit 510 enables the core network device to communicate with other devices or systems through a backhaul connection (e.g., wired backhaul or wireless backhaul) or through the network. The communication unit 510 may include one or more transceivers.

The storage unit 520 stores data such as e.g., a basic program, an application program, and setting information for an overall operation of the core network device. The storage 520 may include a volatile memory, a non-volatile memory, or a combination of the volatile memory and the non-volatile memory. Further, the storage unit 520 provides the stored data according to a request of the controller 530.

The controller 530 controls overall operations of the core network device. For example, the controller 530 transmits and receives signals through the communication unit 510. Further, the controller 530 records and reads data in/from the storage unit 520. To this end, the controller 530 may include at least one processor. According to one or more embodiments, the controller 530 may control the apparatus to perform operations according to one or more embodiments described in the disclosure.

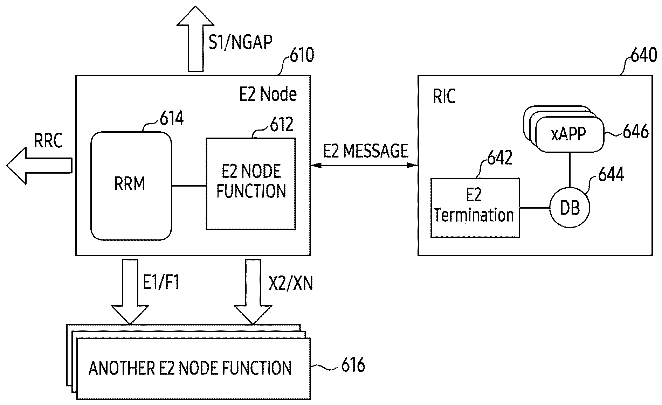

FIG. 6 illustrates a logical function related to an E2 message of an E2 node and an RIC in a radio access network according to one or more embodiments of the disclosure.

Referring to FIG. 6, an RIC 640 and an E2 node 610 may transmit or receive E2 messages to/from each other. For example, the E2 node 610 may be an O-CU-CP, an O-CU-UP, an O-DU, or a base station. The communication interface of the E2 node may be determined depending upon the type of the E2 node 610. For example, the E2 node 610 may communicate with another E2 node 616 through an E1 interface or an F1 interface. Alternatively, for example, the E2 node 610 may communicate with the E2 node 616 via an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 corresponds to a specific xApp (application S/W) 646 installed in the RIC 640. For example, in case of a KPI monitor, KPI monitor collection S/W may be installed in the RIC 640, and the E2 node 610 may include the E2 node function 612 that generates KPI parameters and then delivers an E2 message including the KPI parameters to an E2 termination 642 located in the RIC 640. The E2 node 610 may include a radio resource management (RRM) 614. The E2 node 610 may manage resources provided to a radio network for a terminal.

The E2 termination 642 (located in the RIC 640) is a termination of the RIC 640 for the E2 message, and performs a function of interpreting the E2 message delivered (or transmitted) by the E2 node 610, and then, delivering the E2 message to the xApp 646. A database 644 (located in the RIC 640) may be used for the E2 termination 642 and the xApp 646. The E2 node 610 (shown in FIG. 6) is a terminal of at least one interface, and may be understood as a termination of messages transmitted to a terminal, a neighboring base station, and a core network.

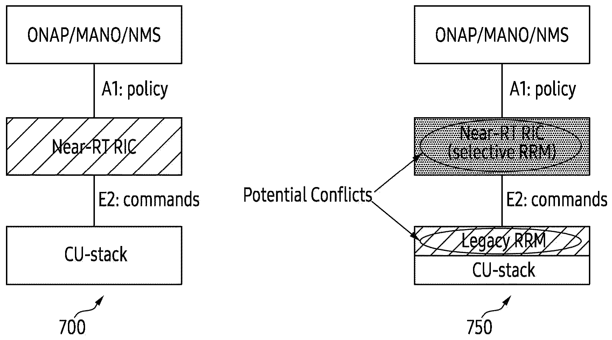

FIG. 7 illustrates examples of functional separations between an E2 node and an RIC according to one or more embodiments of the disclosure. The O-RAN specification provides functional separations between the E2 node and the RIC. For example, the E2 node may be a CU, and the RIC may be a near-RT RIC. The RIC may be connected to open network automation platform (ONAP) / management and orchestration (MANO) / network management system (NMS) through an A1 interface. The RIC may be connected to the E2 node through an E2 interface. The E2 interface may deliver commands. Functional separation options may include functional separation 700 that manages the entire radio resource management (RRM) in the near-RT RIC, and functional separation 750 that optionally manages the RRM in the near-RT RIC.

In related art, the near-RT RIC may support E2 with an open logical interface aimed at multiple vendor environments, regardless of the implementation of specific RRC-RRM algorithms or operations located in near-RT RIC. In one embodiment, E2SM-RIC (E2 Service Model Radio Interface Control) may be paired with E2SM-NI capable of performing injection/modification/configuration of a Per UE RRC message for each I/F and network entity. In other words, the near-RT RIC can be gradually improved from the function separation 750 toward the function separation 700. E2 may evolve into an open logical interface that may be independent of the implementation of a certain RRC-RRM algorithm or operation in the near-RT RIC and may aim at multi-vendor environments.

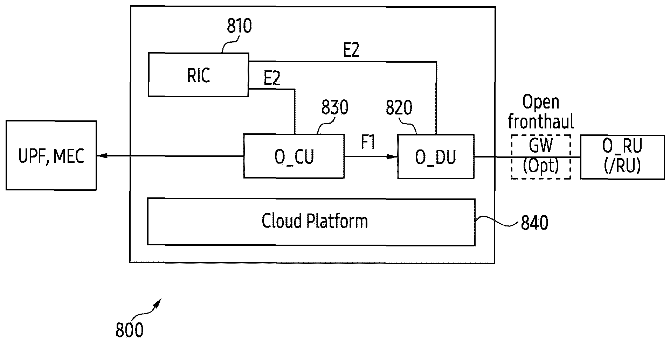

FIG. 8 illustrates an example of implementation of an E2 node and an RIC 810 according to one or more embodiments of the disclosure. In an example 800, the E2 node (e.g., O-DU 820, O-CU 830) and the RIC 810 may be virtualized on a cloud platform 840 (e.g., open chassis and blade-specification edge clouds) and configured in a device (e.g., a server). Such a scenario can support deployment in dense urban areas with abundant fronthaul capacity enabling baseband unit (BBU) functions pooled at a central location, with low latency enough to meet the O-DU latency requirements. In one embodiment, it may not be necessary to attempt to centralize the RIC close to RT beyond the limit capable of centralizing the O-DU functionality. According to an embodiment, E2SM-RIC may be optimized for an O-RAN deployment scenario in which near-RT RIC, O-CU, and O-DU are implemented in an O-Cloud Platform.

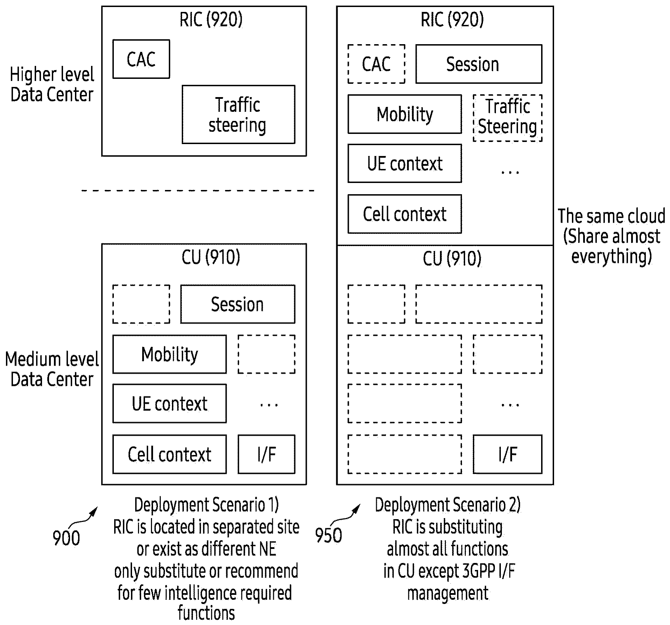

FIG. 9 illustrates examples of functional separations between a centralized unit (CU) 910 and an RIC 920 according to one or more embodiments of the disclosure. Referring to FIG. 9, the functional separations may be performed according to a deployment scenario #1 (example 900) or a functional deployment scenario #2 (example 950).

**Deployment Scenario #1 (900):** RIC is located at a separated site or exists only as a different Network Element (NE), and substitutes or recommends a few of intelligence required features.

**Deployment Scenario #2 (950):** RIC can substitute almost all functions of CU except 3GPP I/F management.

Although FIG. 9 illustrates two scenarios, other scenarios may be applied. For example, in the deployment scenario #1 (900), the mobility function may be performed by the RIC 920 rather than the CU 910. Further, for example, in the deployment scenario #1 (900), the UE context function may be performed by the RIC 920 and not the CU 910. Further, for example, in the deployment scenario #1 (900), the session setting function may be performed by the RIC 920, and not the CU 910.

An E2 setup procedure may be used to establish an E2 interface between a Near-RT RIC and an E2 node. The E2 node may transmit an E2 setup request message to the Near-RT RIC. The E2 setup request message may include RIC service and E2 node configuration information. The Near-RT RIC may transmit an E2 setup response message to the E2 node. The E2 setup response message may include RIC service and E2 node configuration acknowledge.

Through the E2 setup procedure, the E2 node may provide a list of mappings of services to supported Near-RT RIC services and functions within the E2 node. The provided information may be specific to each RAN function in the E2 node and may be defined by a specific E2 service model. The Near-RT RIC may extract a list of mappings of services to the supported Near-RT RIC services and functions and may store information. Through the E2 setup procedure, the E2 node may provide the E2 node configuration information. The provided information may be defined by an E2 node type and an E2 node system specification. The Near-RT RIC may extract a list of the E2 node configuration information and may store the information.

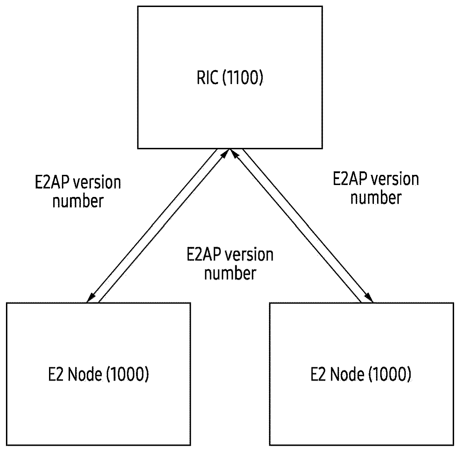

FIG. 10 illustrates an example of transmitting a version number of an E2 application protocol (E2AP) specification according to one or more embodiments. An interface between an E2 node 1000 and an RIC 1100 (in other words, a version of the E2AP) may vary. The RIC 1100 may be required to identify E2AP specification information of the E2 node 1000 in order to control the E2 node 1000.

Referring to FIG. 10, the E2 node 1000 may provide an E2AP specification number to the RIC 1100 (e.g., Near-RT RIC). The E2AP specification number may indicate a version number of an O-RAN specification (e.g., 2.02). In the E2AP specification, non-backward compatibility (NBC) occurred continuously from the initial version (e.g., 1.0) to the current version (2.02). As the specification was updated, additional IEs (e.g., transaction ID, RAN Functions Added List, and E2 Node Component Configuration Addition List) were introduced. For example, the 'transaction id' IE was not included in E2AP 1.0 and E2AP 2.01, but was introduced in E2AP 2.02. Also, for example, the 'E2 Node Component Configuration Addition List' IE was not included in the E2AP 1.0 and the E2AP 2.01, but was introduced in the E2AP 2.02. As the E2AP specification develops in the future as well as the progress of the current E2AP specification, the NBC may additionally and repeatedly occur.

The NBC of the E2AP specification causes a hassle of forcing a user to install a new driver or update the entire software in the device whenever a function of an E2 interface is updated. To solve the above-described problem, the E2 node and the Near-RT RIC according to one or more embodiments of the disclosure proposes a device and a method for sharing the version number of the E2AP specification through a procedure defined in the O-RAN specification.

According to an embodiment, the E2 node may share the version number of the E2AP specification through an E2 setup procedure for setting up the Near-RT RIC and the E2 interface. Hereinafter, in embodiments of the disclosure, the E2 setup procedure is described as an example, but the embodiments of the disclosure are not limited thereto. The method for providing a version of the specification described in the embodiments of the disclosure may be applied to at least one of a reset procedure, an error indication, an RIC service update procedure, an E2 node configuration update procedure, or an E2 connection update procedure.

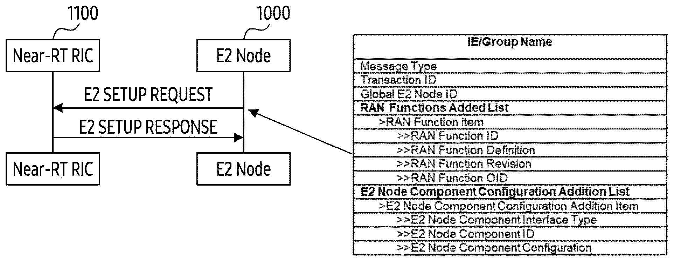

FIGS. 11A to 11D illustrate an example of an E2 setup request message for providing a version number of an E2AP specification, according to an embodiment. In an E2 setup procedure according to a defined procedure, there is a problem that the RIC 1100 (e.g., Near-RT RIC) does not know an E2AP specification version of an interface supported in the E2 node 1000. Thus, through FIGS. 11A to 11D, a method for notifying the RIC (e.g., Near-RT RIC) 1100 of the E2AP specification version of the interface supported in the E2 node 1000 is described. According to the embodiments, the E2 node 1000 may add information on an E2AP version number to the end of the E2 setup request message in order to satisfy backward compatibility.

Referring to FIG. 11A, the E2 node 1000 may transmit the E2 setup request message to the RIC (e.g., Near-RT RIC) 1100. The RIC (e.g., Near-RT RIC) 1100 may transmit an E2 setup response message to the E2 node 1000. The O-RAN specifies a base station as the E2 node 1000, but based on a 3GPP specification, depending on an implementation method (e.g., virtualized), it may have an integrated deployment or a distributed deployment. For example, the base station (e.g., gNB) may have the integrated deployment in which a CU and a DU are configured together. For another example, the base station (e.g., gNB) may have a 2-split deployment in which the CU and the DU are separated. For another example, the base station (e.g., the gNB) may have a 3-split deployment in which CU-CP, CU-UP, and DU are separated from each other.

The E2 setup request message (transmitted to the Near-RT RIC) may include a structure defined in the E2 application protocol (E2AP) specification (e.g., O-RAN specification E2AP 2.02).

**[Table 1]**

| **IE/Group Name** | | |
|---|---|---|
| Message Type | | |
| Transaction ID | | |
| Global E2 Node ID | | |

| **RAN Functions Added List** | | |
|---|---|---|
| | >RAN Function item | |
| | | >>RAN Function ID |
| | | >>RAN Function Definition |
| | | >>RAN Function Revision |
| | | >>RAN Function OID |

| **E2 Node Component Configuration Addition List** | | |
|---|---|---|
| | >E2 Node Component Configuration Addition Item | |
| | | >>E2 Node Component Interface Type |
| | | >>E2 Node Component ID |
| | | >>E2 Node Component Configuration |

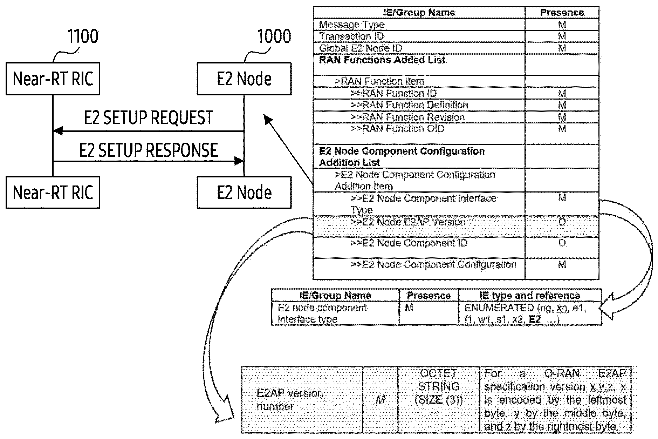

FIG. 11B illustrates an example of an E2 setup request message including an IE for indicating a version number of an E2AP specification of the E2 node 1000 according to an embodiment. The E2 node 1000 (e.g., gNB, gNB-CU, gNB-DU, eNB, eNB-CU, eNB-DU) may add the IE for indicating a version number of the E2AP specification to a structure of the E2 setup request message defined in the O-RAN E2AP specification in a E2 setup request procedure to the RIC 1100 (e.g., Near-RT RIC). For example, the E2 node 1000 may add the IE specified in the following table to the end of the E2 setup request message.

**[Table 2]**

| **IE/Group Name** | **Presence** | **Range** | **IE type and reference** | **Semantics description** | **Criticality** | **Assigned Criticality** |
|---|---|---|---|---|---|---|
| E2AP version number | M | | OCTET STRING (SIZE (3)) | For an O-RAN E2AP specification version x.y.z, x is encoded by the leftmost byte, y by the middle byte, and z by the rightmost byte. | YES | Ignore |

The E2 setup request message including the IE may be used to encode and transmit up to seven 3GPP specification number for each I/F each of 3GPP into a 3-Octet string. The 3-Octet string is an example for the IE, which may include other sizes of strings, e.g., two octet strings.

According to an embodiment, the E2 setup request message may include the IE indicating the version number of the E2AP specification. The version number may be indicated in the form of 'x,y,z' or 'x.yz'. In the above Table 2, three octet strings are described to indicate the version number in the form of 'x,y,z' or 'x.yz', but embodiments of the disclosure are not limited thereto. According to another embodiment, in order to reduce a size of a field, the E2 node may indicate a specification version of the E2AP based on the form of 'x, y'. The E2 node may indicate the specification version of the E2AP through two octet strings.

According to an embodiment, the E2 setup request message may include the IE indicating an interface type. For example, "E2 Node Component Interface Type" may indicate the interface type. For example, the interface type may indicate the following types:
1) NG interface,
2) XN interface,
3) E1 interface,
4) F1 interface,
5) W1 interface,
6) S1 interface,
7) X2 interface, and
8) E2 interface.

According to one or more embodiments, in order to indicate the version number of the E2AP specification, the interface type of the E2 setup request message may be required to indicate the E2 interface. The IE (e.g., E2AP version number) for indicating the version number of the E2AP specification is present in case that the interface type of the E2 node indicates 'e2.' In case that the interface type of the E2 setup request message indicates a type other than the E2 interface, the IE for indicating the version number of the E2AP specification may not be included in the E2 node component configuration information. In the E2 setup request message, the 'E2 Node E2AP Version' IE may be included. In one embodiment, the inclusion of the 'E2AP version number' IE in the 'E2 Node E2AP Version' IE may be optional. In one embodiment, the inclusion of the 'E2AP version number' IE in the 'E2 Node E2AP Version' IE may be mandatory.

In one embodiment, the structure of the E2 setup request message may be defined to indicate the version number of the E2AP together with a version number of the 3GPP specification. For example, the structure of the E2 setup request message may be defined as follow.

**[Table 3]**

| **IE/Group Name** | **Presence** | **Range** | **Semantics description** |
|---|---|---|---|
| Message Type | M | | |
| Transaction ID | M | | . |
| Global E2 Node ID | M | | |

| **RAN Functions Added List** | | *1* | List of RAN functions in E2 node |
|---|---|---|---|
| >RAN Function item | | *1.. <maxofRANfunctionID>* | |
| >>RAN Function ID | M | | Id of the declared Function |
| >>RAN Function Definition | M | | Definition of Function |
| >>RAN Function Revision | M | | Revision counter |
| >>RAN Function OID | M | | Object identifier of corresponding E2SM |

| **E2 Node Component Configuration Addition List** | | *1* | List of E2 Node component configuration information |
|---|---|---|---|
| >E2 Node Component Configuration Addition Item | | 1.. *<maxofE2nodeComponents>* | |
| >>E2 Node Component Interface Type | M | | E2 Node component interface type |
| >>Interface Protocol Version | O | OCTET STRING(SIZE(3)) | For a 3GPP/O-RAN specification version x.y.z, x is encoded by the leftmost byte, y by the middle byte, and z by the rightmost byte. (ex. V2.0.3) |
| >>E2 Node Component ID | O | | E2 Node Component Identifier |
| >>E2 Node Component Configuration | M | | Contents depends on component interface type |

According to an embodiment, information for indicating the version number (e.g., 'Interface Protocol Version' IE) may depend on information for indicating the interface type (e.g., 'E2 Node Component Interface Type' IE). For example, in case that the 'E2 Node Component interface Type' IE of the E2 setup request message indicates 'xn', the version number may indicate the specification version (e.g., 16.8.0) of 3GPP TS 38.423. Also, for example, in case that the 'E2 Node Component Interface Type' IE of the E2 setup request message indicates 'e2,' the version number may indicate the specification version (e.g., 2.02) of the E2AP.

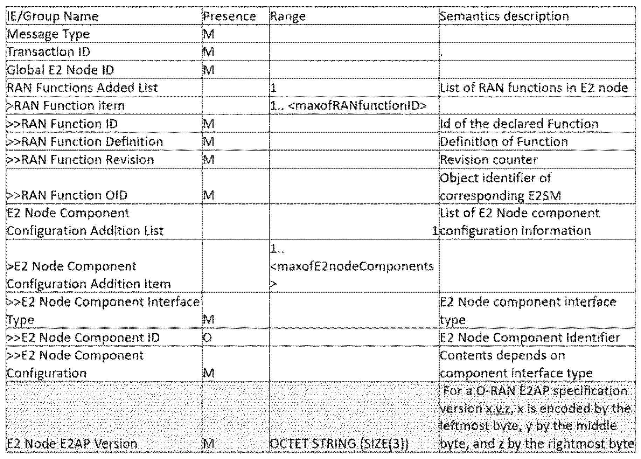

Referring to FIG. 11C, according to an embodiment, for backward compatibility, information for indicating the version number of the E2AP specification may be disposed at the end of the configuration information for each type of E2 node. For example, as shown in FIG. 11C, the information for indicating the version number of the E2AP specification (e.g., E2 Node E2AP Version IE) may be added after the 'E2 Node Component configuration' IE of the configuration information.

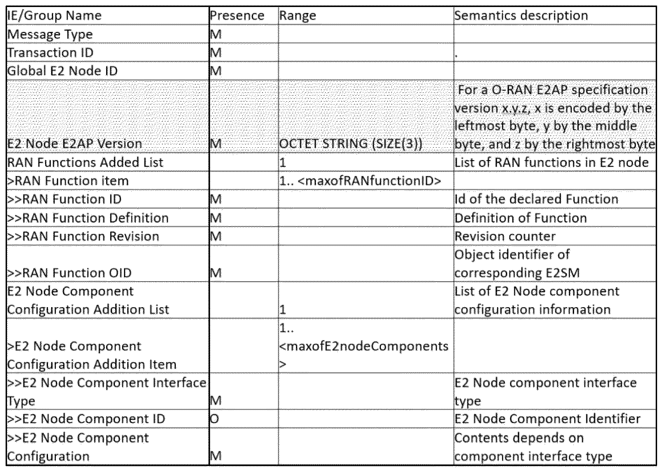

Referring to FIG. 11D, according to an embodiment, as an essential component from a specification to be updated at later time, the information for indicating the version number of the E2AP specification may be added as an independent IE (e.g., "E2 Node E2AP Version" in FIG. 11D) in the E2 setup request message.

In the disclosure, information for indicating an interface type may be used to identify the interface type from the information in a node receiving the information. For example, the information for indicating the interface type may indicate a specific value among candidate values of the interface type (e.g., ng, xn, e1, f1, w1, s1, x2, and e2). The node receiving the information may identify an interface type corresponding to the specific value. According to an embodiment, the information for indicating the interface type may indicates the E2 interface. The node receiving the information may identify that an application protocol configured for the E2 node is E2AP. In the disclosure, information for indicating a version of the E2AP may be used to identify a version of the E2AP from the information in the node receiving the information. For example, the information for indicating the version of the E2AP may include a bit sequence. The node receiving the information may identify a version corresponding to a value indicated by the bit string. The version may indicate a capability range comprising functions supported by the corresponding protocol (e.g., E2AP).

According to embodiments, the information for indicating the version of the E2AP may include bit sequences. For example, the information for indicating the version of the E2AP may include one or more octet strings. Each octet string represents a sequence of a byte or octets used to represent binary data. An octet string may consist of an 8-bit integer. Octet strings can be used to represent binary data in network protocols and network device management. The node receiving the information for indicating the version of the E2AP can identify the version of the E2AP based on decoding of the information. For example, information for indicating the version of the E2AP may obtain a plurality of octet strings (e.g., 3 octet strings) through the decoding. The node may obtain a value corresponding to each octet string. The node may identify (or determine) the version of the E2AP based on the obtained values.

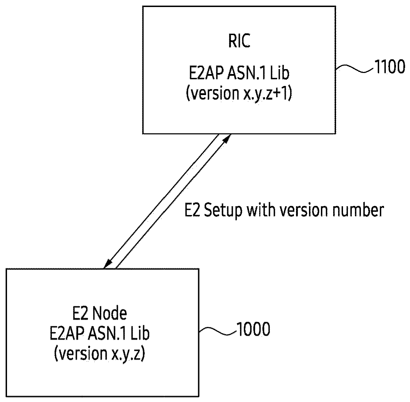

FIG. 12 illustrates an example of identifying compatibility according to a version number of an E2AP specification according to an embodiment.

Referring to FIG. 12, a library of E2AP abstract syntax notation (ASN).1 of the RIC 1100 (e.g., Near-RT RIC) may support E2AP x.y.z+1. The E2AP ASN.1 library of the E2 node 1000 may support E2AP x.y.z. The ASN.1 is a standardized notation used to describe the data structure of messages exchanged between communication entities. The ASN.1 is a notation with a long record of reliability and interoperability, and may support the exchange of information in all form (e.g., audio, video, and data).

The RIC (e.g., Near-RT RIC) 1100 may identify the version of the E2AP. The RIC (e.g., Near-RT RIC) 1100 may determine whether to connect to the E2 node 1000 based on the identified version of the E2AP. For example, in case that the E2 node 1000 corresponds to an E2AP version that is not supported by the RIC (e.g., Near-RT RIC) 1100, a setup request for the E2 node 1000 may not be allowed regardless of compatibility. In this case, according to an additional embodiment, the RIC (e.g., Near-RT RIC) 1100 may indicate to the E2 node 1000 a cause for not allowing the setup request for the E2 node 1000. Also, for example, the RIC (e.g., Near-RT RIC) 1100 may filter at least some of IEs received from the E2 node 1000 when the E2 node 1000 corresponds to the E2AP version not supported by the RIC (e.g., Near-RT RIC) 1100. In other words, through the E2AP version in the E2 node 1000, a procedure for identifying the IE which is not transmitted may not be performed.

When version information of the E2AP specification is different between two network entities (e.g., the E2 node 1000 and the RIC (e.g., Near-RT RIC) 1100), a compatibility problem may occur. For example, the RIC (e.g., Near-RT RIC) 1100 may receive the IEs from the E2 node 1000. In this case, for the IEs (e.g., transaction ID, RAN Functions Added List, E2 Node Component Configuration Addition List) supported only in a higher version, the Near-RT RIC may skip decoding. In case that the RIC (e.g., Near-RT RIC) 1100 does not receive specific information, it is not known whether the specific information did not come due to low version or was not transmitted from the E2 node 1000. As described above, a recognition level between the RICs (e.g., Near-RT RICs) for a specific message may be different from information of the E2 node 1000 for the specific message. This difference may cause an error in messages transmitted through an E2AP interface. Thus, the E2 node 1000 and the RIC (e.g., Near-RT RIC) 1100 according to one or more embodiments of the disclosure may reduce the above-described error and may improve the communication performance of an E2 interface by sharing an interface type and version information of a 3GPP specification for the interface type.

Under the existing E2AP specification of O-RAN, non-backward compatible issues may occur frequently. The disclosure relates to an apparatus and a method for controlling an E2 node by a RIC in a radio access network. The present disclosure provides the apparatus and the method for controlling the E2 node through an E2 message conforming to an open radio access network (O-RAN) specification of a wireless communication system. In addition, the disclosure provides the apparatus and the method for transmitting a specification number of the O-RAN E2 application protocol (E2AP) of the E2 node to a radio access network (RAN) intelligent controller (RIC) in the wireless communication system.

According to one or more embodiments of the disclosure, an E2 node provides a radio access network (RAN) intelligent controller (RIC) with a version of an E2AP specification related to the E2 node (e.g., central unit (CU) or control plane (CU-CP)) in a wireless communication system. The RIC may perform a specific wireless communication control function according to the E2AP version of an O-RAN specification. Also, the RIC may enable the E2 node to be effectively controlled regardless of the compatibility of the E2AP specification of a base station, thereby providing a function of enhancing mutual compatibility of an E2 interface.

Effects obtained from the disclosure are not limited to those described above, and any other effects not mentioned herein will be clearly understood by those having ordinary knowledge in the art to which the disclosure belongs, from the following description.

According to embodiments, a method performed by an E2 node, may comprise transmitting, to a near-real time (RT) radio access network (RAN) intelligent controller (RIC), E2 setup request message. The method may comprise receiving, from the RIC, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to an embodiment, the E2 setup request message may include information on a type of the communication protocol. The information on the type of the communication protocol may indicate E2 interface.

According to an embodiment, information element (IE) for an E2 node component configuration addition list of the E2 setup request message may include information on a type of the communication protocol and version information. The information on the type of the communication protocol may comprise one of X2 interface, Xn interface, F1 interface, S1 interface, E1 interface, NG interface, W1 interface, or E2 interface. In case that the information on the type of the communication protocol indicates the X2 interface, the Xn interface, the F1 interface, the S1 interface, E1 interface, the NG interface, or the W1 interface, the version information may indicate a version of a 3rd generation partnership project (3GPP) standard corresponding to the type of the communication protocol. In case that the information on the type of the communication protocol indicates the E2 interface, the version information may indicate a version of a standard of the E2AP.

According to an embodiment, the version information may comprise a field specified to indicate a version number of standard of the E2AP, supported in the E2 node.

According to an embodiment, the version information may comprise a field indicating a version number of standard of the E2AP, supported in the E2 node.

According to an embodiment, the version information may be used for a backward compatibility of the E2AP. For example, the version information may indicate the backward compatibility of the E2AP.

According to embodiments, a method performed by a near-real time (RT) radio access network (RAN) intelligent controller (RIC), the method may comprise receiving, from an E2 node, E2 setup request message. The method may comprise transmitting, to the E2 node, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to an embodiment, the E2 setup request message may include information on a type of the communication protocol. The information on the type of the communication protocol may indicate E2 interface.

According to an embodiment, information element (IE) for an E2 node component configuration addition list of the E2 setup request message may include information on a type of the communication protocol and version information. The information on the type of the communication protocol may comprise one of X2 interface, Xn interface, F1 interface, S1 interface, E1 interface, NG interface, W1 interface, or E2 interface. In case that the information on the type of the communication protocol indicates the X2 interface, the Xn interface, the F1 interface, the S1 interface, E1 interface, the NG interface, or the W1 interface, the version information may indicate a version of a 3rd generation partnership project (3GPP) standard corresponding to the type of the communication protocol. In case that the information on the type of the communication protocol indicates the E2 interface, the version information may indicate a version of a standard of the E2AP.

According to an embodiment, the version information may comprise a field specified to indicate a version umber of standard of the E2AP, supported in the E2 node.

According to an embodiment, the version information may comprise a field indicating a version number of standard of the E2AP, supported in the E2 node.

According to an embodiment, the version information may be used for a backward compatibility of the E2AP. For example, the version information may indicate the backward compatibility of the E2AP.

According to embodiments, a device of an E2 node may comprise at least one transceiver; and at least one processor coupled to the at least one transceiver. The at least one processor may be configured to transmit, to a near-real time (RT) radio access network (RAN) intelligent controller (RIC), E2 setup request message. The at least one processor may be configured to receive, from the near-RT RIC, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to an embodiment, the E2 setup request message may include information on a type of the communication protocol. The information on the type of the communication protocol may indicate E2 interface.

According to an embodiment, information element (IE) for an E2 node component configuration addition list of the E2 setup request message may include information on a type of the communication protocol and version information. The information on the type of the communication protocol may comprise one of X2 interface, Xn interface, F1 interface, S1 interface, E1 interface, NG interface, W1 interface, or E2 interface. In case that the information on the type of the communication protocol indicates the X2 interface, the Xn interface, the F1 interface, the S1 interface, E1 interface, the NG interface, or the W1 interface, the version information may indicate a version of a 3rd generation partnership project (3GPP) standard corresponding to the type of the communication protocol. In case that the information on the type of the communication protocol indicates the E2 interface, the version information may indicate a version of a standard of the E2AP.

According to an embodiment, the version information may comprise a field specified to indicate a version number of standard of the E2AP, supported in the E2 node.

According to an embodiment, the version information may comprise a field indicating a version number of standard of the E2AP, supported in the E2 node.

According to an embodiment, the version information may be used for a backward compatibility of the E2AP. For example, the version information may indicate the backward compatibility of the E2AP.

According to embodiments, a device of a near-real time (RT) radio access network (RAN) intelligent controller (RIC), may comprise at least one transceiver, and at least one processor coupled to the at least one transceiver. The at least one processor may be configured to receive, from an E2 node, E2 setup request message. The at least one processor may be configured to transmit, to the E2 node, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to an embodiment, the E2 setup request message may include information on a type of the communication protocol. The information on the type of the communication protocol may indicate E2 interface.

According to an embodiment, information element (IE) for an E2 node component configuration addition list of the E2 setup request message may include information on a type of the communication protocol and version information. The information on the type of the communication protocol may comprise one of X2 interface, Xn interface, F1 interface, S1 interface, E1 interface, NG interface, W1 interface, or E2 interface. In case that the information on the type of the communication protocol indicates the X2 interface, the Xn interface, the F1 interface, the S1 interface, E1 interface, the NG interface, or the W1 interface, the version information may indicate a version of a 3rd generation partnership project (3GPP) standard corresponding to the type of the communication protocol. In case that the information on the type of the communication protocol indicates the E2 interface, the version information may indicate a version of a standard of the E2AP.

According to an embodiment, the version information may comprise a field specified to indicate a version number of standard of the E2AP, supported in the E2 node.

According to an embodiment, the version information may be used for a backward compatibility of the E2AP.

According to embodiments, a non-transitory computer-readable medium is provided. The non-transitory computer-readable comprise a memory storing a program including instructions. When the instructions are executed by a processor of an E2 node, the instructions cause the E2 node to transmit, to a near-real time (RT) radio access network (RAN) intelligent controller (near-RT RIC), an E2 setup request message and to receive, from the near-RT RIC, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to embodiments, a non-transitory computer-readable medium is provided. The non-transitory computer-readable comprise a memory storing a program including instructions. When the instructions are executed by a processor of a near-real time (RT) radio access network (RAN) intelligent controller (near-RT RIC), the instructions cause the Near-RT RIC to receive, from an E2 node, an E2 setup request message and to transmit, to the E2 node, an E2 setup response message. The E2 setup request message includes information for indicating an E2 interface between the E2 node and the near-RT RIC among an NG interface, an XN interface, an E1 interface, a F1 interface, a W1 interface, a S1 interface, a X2 interface, and the E2 interface and information for indicating a version of E2 application protocol (E2AP) of a radio network layer in the E2 interface between the E2 node and the near-RT RIC.

According to an embodiment, the information indicating the version of the E2AP and the information for indicating the E2 interface are included in an E2 node component configuration addition list information element (IE) of the E2 setup request message. The information indicating the version of the E2AP is encoded subsequent to the information for indicating the E2 interface. The meaning of being subsequently encoded may indicate that an IE of the information for indicating the version of the E2AP is placed next to an IE corresponding to the information for indicating the E2 interface.

According to an embodiment, the information for indicating the E2 interface is included in an E2 node component configuration addition list information element (IE) of the E2 setup request message. The information indicating the version of the E2AP is encoded at the end of the E2 setup request message. The meaning of being encoded at the end of the E2 setup request message may indicate that the IE corresponding to the information for indicating the version of the E2AP among the IEs of the E2 setup request message is placed last.

According to an embodiment, the E2 setup request message comprises a message type of the E2 setup request message, a transaction identifier (ID) of the E2 setup request message, and a global ID of the E2 node. The information indicating the version of the E2AP is encoded subsequent to the global ID of the E2 node.

According to an embodiment, the information indicating the version of the E2AP and the information for indicating the E2 interface are included in an E2 node component configuration addition list information element (IE) of the E2 setup request message. The information indicating the version of the E2AP is placed subsequent to the information for indicating the E2 interface. The meaning of being subsequently placed may indicate that an IE of the information for indicating the version of the E2AP is placed next to an IE corresponding to the information for indicating the E2 interface.

According to an embodiment, the information for indicating the E2 interface is included in an E2 node component configuration addition list information element (IE) of the E2 setup request message. The information indicating the version of the E2AP is placed at the end of the E2 setup request message. The meaning of being placed at the end of the E2 setup request message may indicate that the IE corresponding to the information for indicating the version of the E2AP among the IEs of the E2 setup request message is placed last.

According to an embodiment, the E2 setup request message comprises a message type of the E2 setup request message, a transaction identifier (ID) of the E2 setup request message, and a global ID of the E2 node. The information indicating the version of the E2AP is placed subsequent to the global ID of the E2 node.

In the above-described embodiments, examples of including information indicating a version of an E2AP specification in an E2 setup request message have been described, but embodiments of the disclosure are not limited thereto. According to an embodiment, the information indicating version of the E2AP specification may be included in an E2 setup response message. By receiving the version of the E2AP specification of the E2 setup response message, the E2 node may check version on an interface of the E2 node identified by a Near-RT RIC. According to another embodiment, the information indicating the version of the E2AP specification may be included in an E2 node configuration update message. In case that the version of the E2AP specification is not transmitted in an E2 setup procedure, through an E2 node configuration update procedure, the E2 node may provide the version of the E2AP specification of the interface to the Near-RT RIC. Also, only the E2 setup procedure has been described in the disclosure, but embodiments of the present disclosure are not limited thereto. The information for indicating the version of the E2AP of the disclosure may also be used in other procedures such as the RIC service update procedure. For example, the information for indicating the version of the E2AP may be included in the RIC service update message of the RIC service update procedure instead of the E2 setup request message of the E2 setup procedure.

Various embodiments of the disclosure may be implemented as software including one or more instructions stored in a storage medium readable by a machine (e.g., a device performing functions of the E2 node 1000, a device performing functions of the Near-RT RIC 1100). It can be. For example, a processor (e.g., controller 530) of the machine (e.g., E2 node 1000, Near-RT RIC 1100) calls at least one command among one or more instructions stored from a storage medium and enables the machine to be operated to perform at least one function according to the called at least one instruction. The one or more instructions comprises a code generated by a compiler or code executable by an interpreter. The storage medium readable by the machine may be provided in the form of a non-transitory storage medium. The term 'non-transitory' refers that the storage medium is tangible and does not contain signals (e.g., electromagnetic waves), and the term does not distinguish between the case where data is stored semi-permanently and temporarily stored in the storage medium. O-RAN makes it possible to configure a virtualized intelligent network with standardized open interfaces. For network virtualization, operations according to embodiments may be implemented in the form of a recording medium (e.g., memory).

According to an embodiment, the method according to various embodiments of the disclosure may be included and provided in a computer program product. The computer program product may be traded between sellers and buyers as commodities. The computer program product is distributed in the form of a device-readable storage medium (e.g., compact disc read only memory (CD-ROM)), or distributed (e.g., downloaded or uploaded) on online through an application store (e.g., Play Store^{™}) or between two user devices (e.g., smart phones) directly. In the case of online distribution, at least part of the computer program product may be temporarily stored or temporarily created in a storage medium readable by a device such as a manufacturer's server, an application store server, or a relay server's memory.

According to various embodiments, each component (e.g., module or program) of the above-described components may include a single entity or a plurality of entities, and some of the plurality of entities may be separately disposed in other components. According to various embodiments, one or more components or operations among the aforementioned corresponding components may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by a corresponding component of the plurality of components prior to the integration.. According to various embodiments, the operations performed by a module, program, or other component are executed sequentially, in parallel, iteratively, or heuristically, or one or more of the operations are executed in a different order, or omitted. or one or more other actions may be added.

Methods according to the embodiments described in the claims or the specification of the disclosure may be implemented in the form of hardware, software, or a combination of hardware and software.

When implemented as software, a computer-readable storage medium storing one or more program (software module) may be provided. The one or more program stored in the computer-readable storage medium is configured for execution by one or more processor in the electronic device. The one or more programs include instructions that cause the electronic device to execute methods according to one or more embodiments described in the claim or the specification of the disclosure.

Such program (software modules, software) may be stored in random access memory, non-volatile memory including flash memory, read only memory (ROM), electrically erasable programmable read only memory (EEPROM), magnetic disc storage device, compact disc-ROM (CD-ROM), digital versatile disc (DVD) or other form of optical storage, magnetic cassette. Alternatively, it may be stored in a memory configured with some or all combinations thereof. In addition, each configuration memory may be included a plurality.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the disclosure through an external port. In addition, a separate storage device on the communication network may access a device performing an embodiment of the disclosure.

In the above-described specific embodiments of the disclosure, the component included in the disclosure is expressed in singular or plural according to the presented specific embodiment. However, singular or plural expression is chosen appropriately for the situation presented for convenience of explanation, and the disclosure is not limited to singular or plural component, and even if the component is expressed in plural, it may be configured with singular, or even if it is expressed in singular, it may be configured with plural.

Meanwhile, in the detailed description of the disclosure, the specific embodiment have been described, but it goes without saying that various modification is possible within the limit not departing from the scope of the disclosure.

## Claims

1. A method performed by an E2 node, the method comprising:
transmitting, to a near-real time (RT) radio access network (RAN) intelligent controller (RIC), an E2 setup request message; and
receiving, from the near-RT RIC, an E2 setup response message,
wherein the E2 setup request message comprises:
information for indicating an E2 interface between the E2 node and the near-RT RIC among an NG interface, an XN interface, an E1 interface, a F1 interface, a W1 interface, a S1 interface, a X2 interface, and the E2 interface, and
information for indicating a version of E2 application protocol (E2AP) of a radio network layer in the E2 interface between the E2 node and the near-RT RIC.

2. The method of claim 1,
wherein the information indicating the version of the E2AP and the information for indicating the E2 interface are included in an E2 node component configuration addition list information element (IE) of the E2 setup request message, and
wherein the information indicating the version of the E2AP is encoded subsequent to the information for indicating the E2 interface.

3. The method of claim 1,
wherein the information for indicating the E2 interface is included in an E2 node component configuration addition list information element (IE) of the E2 setup request message, and
wherein the information indicating the version of the E2AP is encoded at the end of the E2 setup request message.

4. The method of claim 1,
wherein the E2 setup request message further comprises a message type of the E2 setup request message, a transaction identifier (ID) of the E2 setup request message, and a global ID of the E2 node, and
wherein the information indicating the version of the E2AP is encoded subsequent to the global ID of the E2 node.

5. The method of claim 1, wherein the information indicating the version of the E2AP is used for a backward compatibility of the E2AP.

6. A method performed by a near-real time (RT) radio access network (RAN) intelligent controller (RIC), the method comprising:
receiving, from an E2 node, an E2 setup request message; and
transmitting, to the E2 node, an E2 setup response message,
wherein the E2 setup request message comprises:
information for indicating an E2 interface between the E2 node and the near-RT RIC among an NG interface, an XN interface, an E1 interface, a F1 interface, a W1 interface, a S1 interface, a X2 interface, and the E2 interface, and
information for indicating a version of E2 application protocol (E2AP) of a radio network layer in the E2 interface between the E2 node and the near-RT RIC.

7. The method of claim 6,
wherein the information indicating the version of the E2AP and the information for indicating the E2 interface are included in an E2 node component configuration addition list information element (IE) of the E2 setup request message, and
wherein the information indicating the version of the E2AP is placed subsequent to the information for indicating the E2 interface.

8. The method of claim 6,
wherein the information for indicating the E2 interface is included in an E2 node component configuration addition list information element (IE) of the E2 setup request message, and
wherein the information indicating the version of the E2AP is placed at the end of the E2 setup request message.

9. The method of claim 6,
wherein the E2 setup request message further comprises a message type of the E2 setup request message, a transaction identifier (ID) of the E2 setup request message, and a global ID of the E2 node, and
wherein the information indicating the version of the E2AP is placed subsequent to the global ID of the E2 node.

10. The method of claim 6, wherein the information indicating the version of the E2AP is used for a backward compatibility of the E2AP.

11. A device of an E2 node, the device comprising:
at least one transceiver; and
at least one processor electrically connected to the at least one transceiver,
wherein the at least one processor is configured to:
transmit, to a near-real time (RT) radio access network (RAN) intelligent controller (RIC), an E2 setup request message, and
receive, from the near-RT RIC, an E2 setup response message,
wherein the E2 setup request message comprises:
information for indicating an E2 interface between the E2 node and the near-RT RIC among an NG interface, an XN interface, an E1 interface, a F1 interface, a W1 interface, a S1 interface, a X2 interface, and the E2 interface, and
information for indicating a version of E2 application protocol (E2AP) of a radio network layer in the E2 interface between the E2 node and the near-RT RIC.

12. The device of claim 11,
wherein the at least one processor is configured to one of methods of claims 2 to 5.

13. A device of a near-real time (RT) radio access network (RAN) intelligent controller (RIC), the device comprising:
at least one transceiver; and
at least one processor electrically connected to the at least one transceiver,
wherein the at least one processor is configured to:
receive, from an E2 node, an E2 setup request message, and
transmit, to the E2 node, an E2 setup response message,
wherein the E2 setup request message comprises:
information for indicating an E2 interface between the E2 node and the near-RT RIC among an NG interface, an XN interface, an E1 interface, a F1 interface, a W1 interface, a S1 interface, a X2 interface, and the E2 interface, and
information for indicating a version of E2 application protocol (E2AP) of a radio network layer in the E2 interface between the E2 node and the near-RT RIC.

14. The device of claim 13,
wherein the at least one processor is configured to one of methods of claims 7 to 10.
